# FASCICULE DE BREVET EUROPEEN

(11) **EP 0 677 753 B1**
(45) Date de publication et mention de la délivrance du brevet: **21.10.1998**
(21) Numéro de dépôt: 95400654.0
(22) Date de dépôt: 23.03.1995
(51) Int. Cl.: G01V 1/38, B63B 21/66, B63G 8/42

(54) **Méthode et dispositif pour l'avancement discontinu d'un objet au contact du fond marin**
Verfahren und Vorrichtung für die diskontinuierliche Vorwärtsbewegung eines den Meeresboden berührenden Objektes
Method and device for discontinuous movement of an object, resting on the sea bottom

(30) Priorité: 15.04.1994 FR 9404621
(43) Date de publication de la demande: 18.10.1995
(73) Titulaire: IFREMER INSTITUT FRANCAIS DE RECHERCHE POUR L'EXPLOITATION DE LA MER, 92138 Issy-les-Moulineaux (FR); INSTITUT FRANCAIS DU PETROLE, 92500 Rueil Malmaison (FR); GEODIA, F-92000 Nanterre (FR)
(72) Inventeur: Michel, Jean-Louis, F-83000 Toulon (FR); Massol, Alain, F-83400 Hyeres (FR); Dubois, Jean-Claude, F-95800 Courdimanche (FR); Cour, Francis, 78600 Maisons Lasffitte (FR)

(56) Documents cités:
- FR-A- 2 611 917
- FR-A- 2 675 110
- US-A- 2 952 834
- US-A- 3 275 097

## Description

La présente invention concerne une méthode et un dispositif pour faire avancer un objet de façon discontinue au moyen d'un véhicule se déplaçant de façon continue sur un fond immergé.

La méthode et le dispositif conviennent notamment pour assurer un entraînement discontinu d'un objet, en respectant entre deux arrêts consécutifs, un distance de translation sensiblement uniforme.

Pour certaines applications, on a besoin d'explorer le fond d'une masse d'eau: océan, mer, lacs etc, dans le but de connaître sa constitution superficielle ou celles des couches sous-jacentes. Par cette exploration, on peut par exemple déterminer le meilleur tracé pour l'ensouillage de câbles, de tuyauteries etc. L'exploration se fait, de manière connue, en remorquant au contact du fond, par exemple un système d'émission-réception d'ondes acoustiques comportant une source d'ondes acoustiques telle qu'un "sparker", un canon à eau ou à air par exemple, et un ou plusieurs capteurs pour recevoir les ondes réfléchies ou réfractées par les couches sous-jacentes. On utilise le plus souvent des dispositifs de réception ou flûtes sismiques comportant une pluralité de géophones regulièrement répartis sur toute leur longueur, celle-ci étant en relation avec la profondeur d'investigation recherchée. Pour la réception des ondes réfractées, il est préférable que la flûte sismique remorquée soit immobile pendant un temps suffisant pour effectuer chacun des cycles d'émission-réception d'ondes élastiques.

Avec ce type d'équipement d'exploration acoustique, on réalise des opérations dites de couverture multiple consistant essentiellement à sommer des signaux captés successivement en un même lieu par plusieurs capteurs différents de l'ensemble de réception qui y sont successivement amenés. Il importe donc que les moyens d'avancement discontinu soient suffisamment précis pour que ce type de recouvrement soit effectivement obtenu.

L'avancement discontinu d'un objet sur le fond peut être obtenu en le reliant par un câble à un navire de surface navigant à vitesse régulière soit directement, soit par l'intermédiaire d'un engin intermédiaire posé sur le fond, et en alternant les phases de traction sur le câble et les phases de relâchement. Une telle méthode ne convient que pour les applications sur très petits fonds, car, lorsque la profondeur augmente, les efforts de traînée ont tendance à faire décoller l'objet.

Une méthode connue pour obtenir un avancement discontinu d'un équipement d'exploration, consiste à le relier à un véhicule roulant sur le fond et pourvu de moteurs électriques. La puissance électrique nécessaire lui est fournie par un navire de surface qui le remorque en immersion. Un équipement de commande sur le navire ou le véhicule, permet une alimentation discontinue des moteurs électriques, de façon à obtenir un avancement intermittent. Mais la conception d'un tel véhicule capable d'enchaîner des mouvements précis d'avance discontinue, s'avère compliquée et sa réalisation est coûteuse.

Une autre méthode connue permettant d'obtenir un remorquage discontinu d'un objet sur le fond, est décrite dans le brevet FR 2.611.917. Elle consiste essentiellement à remorquer en immersion un poisson relié à un bateau tracteur par un "ombilical" comportant un câble de traction, et des câbles d'alimentation électrique et de transmission de signaux. L'objet remorqué est fixé à un câble déroulé d'un treuil monté sur le véhicule. Des moyens de commande à action discontinue installés sur le poisson, permettent, par une alternance de tractions et de relâchements, d'obtenir un mouvement discontinu ou "yoyotage". Avec un tel système de remorquage, la régularité recherchée dans l'avancement de l'objet peut être perturbée du fait que le poisson qui navigue en pleine eau, est fortement sollicité dans les trois dimensions.

Par le brevet FR 2.675.110, on connaît une méthode pour obtenir un remorquage discontinu d'un objet sur le fond. La méthode consiste à relier l'objet par un câble à une chenille d'un chariot chenillé se déplaçant à vitesse régulière sur le fond. On obtient ainsi des alternances d'arrêts quand le point d'attache du câble est au contact du fond et des déplacements quand ce même point d'attache cesse d'être au contact du fond. Un tel système procure de façon simple un avancement discontinu mais on constate que la régularité de l'avancement peut varier en fonction de la nature et du relief du fond.

Le dispositif selon l'invention permet de déplacer de façon discontinue un objet tel qu'un équipement sous-marin, au contact du fond d'une masse d'eau au moyen d'un navire tracteur animé d'un déplacement continu, dans le but d'amener cet équipement à des emplacements successifs du fond à distance déterminée les uns des autres, et en chaque emplacement, de l'immobiliser pour une intervention.

Il est caractérisé en ce qu'il comporte un véhicule en contact permanent avec le fond et relié au navire tracteur, ce véhicule étant pourvu d'un treuil, des moyens de liaison déroulés du treuil, auquel est fixé l'objet remorqué, et un ensemble moteur associé à une unité de pilotage (disposée par exemple sur le véhicule) pour actionner le treuil de façon à déplacer l'objet et annuler sensiblement la force de traction exercée sur ledit équipement durant chaque intervention de l'objet.

Les moyens de liaison comportent par exemple au moins un câble de traction et au moins un câble de liaison détendu en permanence, associé à des moyens pour le maintenir écarté du fond.

Le véhicule est relié à un navire remorqueur par un câble de remorquage et au moins un deuxième câble de liaison de longueur supérieure à celle du deuxième câble de traction qui, comme le premier câble de liaison, est associé à des moyens de flottaison, ou bien, pour certaines applications, par un câble mixte électro-tracteur

Le dispositif comporte par exemple un deuxième véhicule ou traîneau également en contact permanent avec le fond, qui est disposé en tête de l'équipement sous-marin et fixé au câble de traction.

L'ensemble moteur comporte par exemple au moins un moteur électrique et des moyens d'entraînement du treuil de type à roue libre, l'unité de pilotage étant adaptée à actionner le moteur électrique à une vitesse suffisante pour assurer le découplage de la roue libre de façon à faire cesser sensiblement tout effort de traction sur le câble de traction durant chaque intervention.

Suivant un mode de réalisation, le treuil comporte par exemple un tambour associé à des moyens pour contrôler le rangement du câble de traction sur le tambour. L'ensemble moteur comporte par exemple un moteur d'entraînement, contrôlé par l'unité de pilotage, une roue montée sur l'axe du tambour par l'intermédiaire de moyens de couplage de type à roue libre, des moyens de transmission pour communiquer à cette roue les mouvements de rotation du moteur, et une unité de pilotage pour commander le virage du treuil par la mise en rotation du moteur dans un premier sens et le dévirage du treuil par mise en rotation du moteur dans le sens opposé a une vitesse suffisante pour que la roue tourne au moins aussi vite que l'axe du treuil.

Suivant un mode de réalisation particulier, le dispositif comporte des paliers pour supporter l'axe du tambour qui sont associés à des moyens pour délivrer un fluide maintenu constamment en surpression par rapport à la pression hydrostatique, pour diminuer les forces de frottement du tambour sur son axe. Ces moyens d'alimentation en fluide comportent par exemple une enceinte déformable sur laquelle s'exerce en opération la pression hydrostatique et des moyens élastiques pour exercer une pression supplémentaire sur cette enceinte. Des moyens d'alimentation semblables sont, de préférence, associés également au moteur.

Le dispositif peut comporter aussi un moyen de mesure de l'avancement du véhicule (tel qu'un odomètre), ce moyen étant connecté avec l'unité de pilotage.

L'invention concerne aussi une méthode pour déplacer de façon discontinue un équipement sous-marin au contact du fond d'une masse d'eau de façon à l'amener successivement en une série d'emplacements du fond à distance déterminée les uns des autres, et en chaque emplacement l'immobiliser pour une intervention. La méthode est caractérisée en ce qu'elle comporte :
- le déplacement continu d'un premier traîneau pourvu d'un treuil, en contact permanent avec le fond, au moyen d'un véhicule tracteur;
- le rattachement de l'équipement sous-marin au premier traîneau par des moyens de liaison comportant un câble de traction déroulé dudit treuil; et
- l'application à l'équipement d'un mouvement discontinu comprenant alternativement des phases d'entraînement sur traction sur le câble au moyen du treuil et des phases de relâchement du câble.

On a pu vérifier que le dispositif selon l'invention se prête bien à la mise en oeuvre au contact du fond, d'équipements océanographiques ou sismiques par exemple. Il permet d'obtenir un avancement bien régulier avec des pas d'avancement précis et des pauses entre les phases d'avancement où les équipements remorqués ne sont soumis pratiquement à aucune force de traction en raison de la faible inertie des mécanismes d'entraînement utilisés.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où:
- la Fig.1 montre schématiquement le dispositif en opération au fond de la mer par exemple;
- la Fig.2 montre l'agencement du véhicule principal;
- la Fig.3 montre schématiquement un exemple d'ensemble moteur associé à un dispositif d'entraînement à roue libre, permettant l'entraînement discontinu de l'objet remorqué; et
- la Fig.4 montre schématiquement un exemple de moyen d'entraînement de type à roue libre pour l'entraînement intermittent du treuil.

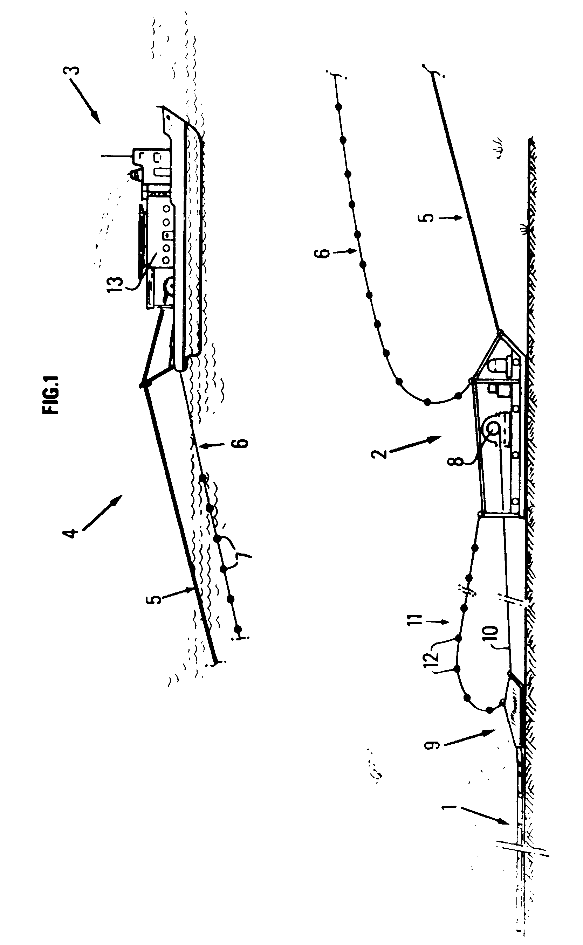

Le dispositif schématisé à la Fig.1, est utilisé pour faire avancer par intermittence sur le fond de la mer par exemple, un objet quelconque, notamment un équipement d'intervention sous-marin. Il peut s'agir d'un ensemble d'émission-réception d'ondes acoustiques constitué d'une source sismique (non représentée) et d'une flûte sismique 1.

Le dispositif comporte un premier véhicule ou traîneau 2 reposant sur le fond, qui est relié à un navire tracteur 3 par des moyens de liaison 4 comportant par exemple un câble de traction 5 et un ou plusieurs câbles de liaison fonctionnelle 6 permettant le transfert bi-directionnel de signaux de commande et de données ainsi que la transmission d'énergie électrique et/ou hydraulique vers l'équipement de fond. Les câbles de liaison 6 sont maintenus en permanence écartés du fond par des flotteurs 7 repartis sur sa longueur et forment une première arche flexible.

Un treuil 8 est installé sur le premier traîneau 2. L'ensemble de mesure est attaché à un deuxième traîneau sous-marin 9. Un câble de traction 10 déroulé du treuil 8, le relie au premier traîneau 2. Un ou plusieurs câbles de transmission 11 maintenus à distance du fond par des flotteurs 12, relient également les deux traîneaux 2, 9. Ils forment une deuxième arche flexible que l'on prévoit suffisamment longue pour rester relâchée quelle que soit la variation de distance envisagée entre les deux traîneaux 2, 9. Des connexions sont prévues entre les câbles 6 et 11 de façon à établir une liaison entre une station de commande 13 sur le navire, et l'ensemble de mesure déplacé au fond de l'eau.

Le traîneau principal 2 comporte un chassis tubulaire pourvu de crochets d'ancrage 14, 15 et 16 respectivement pour le rattachement du câble de traction avant 5, du câble de liaison avant 6, et du câble de liaison arrière 11. Des flotteurs 17 sont disposés à sa partie supérieure et un lest L, à sa partie inférieure, pour assurer la stabilité du traîneau quand il est déplacé sur le fond. Le traîneau 2 est également pourvu d'une plateforme P supportant le treuil 8 et un ensemble moteur 18 d'entraînement du treuil.

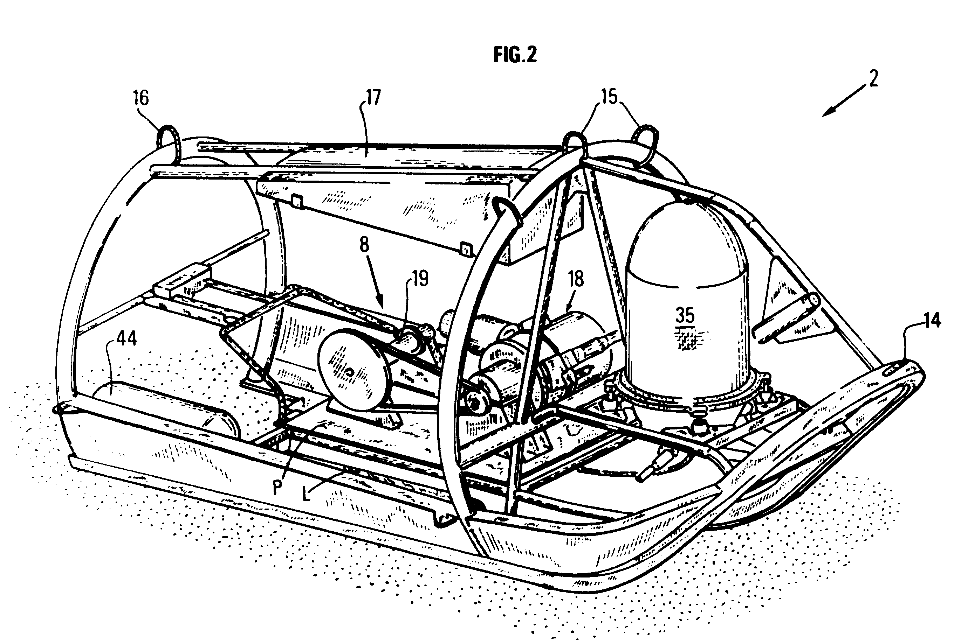

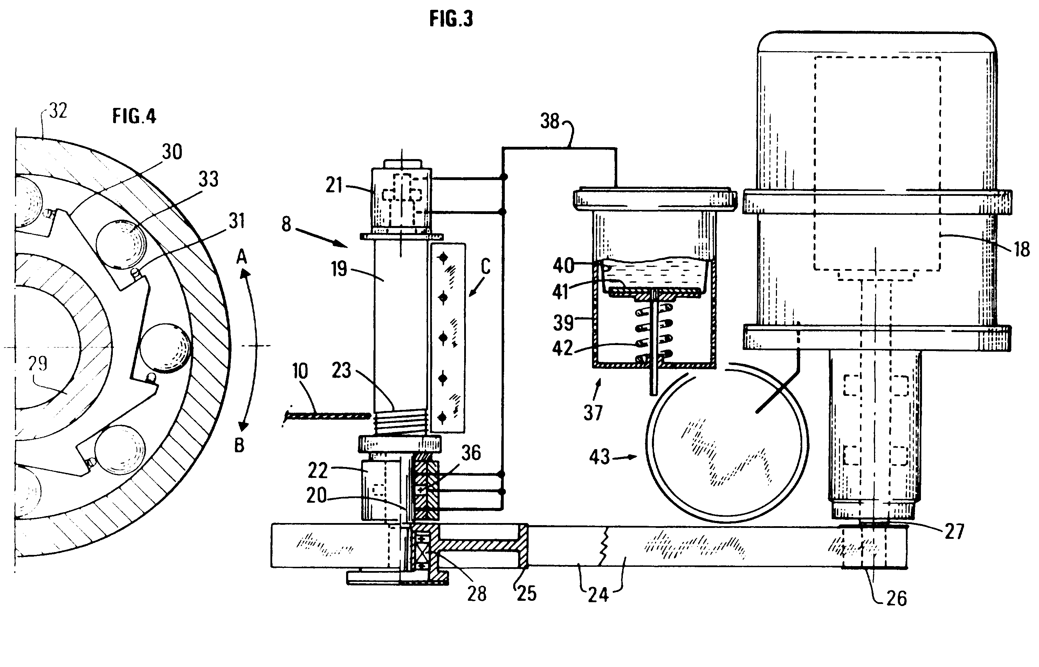

Cet ensemble moteur 18 (Fig.2, 3) qui est alimenté électriquement par l'intermédiaire du câble fonctionnel 6, comporte par exemple un moteur électrique couplé avec un moto-réducteur. Le treuil 8 comporte un tambour 19 pour l'enroulement du câble de traction 10. L'axe 20 du tambour est maintenu par deux paliers 21, 22. Une rainure hélicoïdale 23 est ménagée sur le pourtour du tambour 19 pour guider l'enroulement et le déroulement régulier du câble durant les phases alternées de virage et de dévirage du treuil 8.

Un capot arrondi C est disposé autour du tambour à une distance légèrement supérieure à l'épaisseur du câble de traction 8, de façon à limiter ses flottements lors des dévirages du treuil et éviter ainsi les risques d'emmêlement.

L'entraînement du treuil est assuré par une courroie crantée 24 (ou une chaîne) passant sur deux roues dentées 25, 26 qui sont respectivement solidaires de l'axe 20 et de l'axe de sortie 27 de l'ensemble moteur 18.

Un dispositif d'entraînement 28 du type dit à roue libre, est interposé entre l'axe 20 et la roue dentée 25, de façon à permettre l'entraînement de l'axe 20 dans un seul sens de rotation, correspondant à l'enroulement du câble de traction 10. Ce dispositif d'entraînement comporte (Fig.4) une bague intérieure dentée 29 fixée sur l'axe 20, chaque dent étant dissymétrique et pourvue d'une rampe de blocage 30. Il comporte aussi une bague extérieure annulaire 32 solidaire de la roue dentée 25. Entre les deux bagues 29, 32 sont disposés des galets cylindriques 33 rattachés chacun à une dent par un ressort 31. Avec cet agencement, une rotation dans le sens de la flèche A de la bague extérieure 32 relativement à la bague intérieure 29, provoque un entraînement de celle-ci par coincement des galets 33 contre les rampes de blocage 30. Une rotation en sens opposé (défini par la flèche B) des deux bagues 29 et 32 l'une relativement à l'autre, ramène au contraire les galets 33 au fond de leurs rampes respectives 30 et tout entraînement cesse.

L'ensemble moteur 18 est sous le contrôle d'une unité de pilotage 35 installée également sur la plateforme du traîneau 2. Cette unité commande alternativement le déroulage ou dévirage du treuil 8 pendant les intervalles de temps choisis pour immobiliser l'ensemble de mesure 1, et son enroulage ou virage pour déplacer celui-ci jusqu'à l'emplacement de mesure suivant choisi.

Le déplacement de l'ensemble de mesure 1 est assuré par virage du treuil en actionnant le moteur suivant un premier sens de rotation (sens A Fig.4), de façon à provoquer une solidarisation en rotation des deux bagues 29, 32 par coincement des. galets 33. Arrivé en fin de la phase de virage du treuil, l'ensemble de mesure 1 étant parvenu à l'emplacement d'intervention suivant, on inverse le sens de rotation du moteur d'entraînement 18 de façon que le même mouvement relatif se fasse dans le sens opposé B (Fig.4).

Le dispositif d'entraînement 28 assure donc un débrayage automatique du treuil en fin de course à condition que la vitesse de rotation inversée du moteur soit suffisante. Il faut que la vitesse de rotation de la poulie 25 (et donc celle de la bague extérieure 32) soit toujours supérieure à celle du tambour 19 au cours du déroulement du câble de traction 10 (et donc celle de la bague intérieure 29) Les efforts de traction sur le câble 10 se réduisent alors aux forces de frottement des paliers du tambour 19 ainsi qu'aux forces hydrodynamiques, qui sont insuffisants pour bouger l'ensemble de mesure.

De préférence, des roulements à billes 36 sont interposés entre les paliers 21, 22 et l'axe 20 du tambour 19 ainsi qu'entre la roue dentée 25 et le même axe 20, pour réduire les forces de frottement, ces paliers étant maintenus en légère surpression par rapport à la pression hydrostatique.

A cet effet, les paliers sont alimentés en huile sous pression délivrée par un surpresseur 37, ceci par l'intermédiaire de canalisations 38. Le surpresseur 37 comporte une cage cylindrique 39 percée latéralement de trous par où peut s'exercer en opération la pression hydrostatique. Dans cette cage 39, et donc soumise à la pression hydrostatique, est disposée une enceinte déformable 40 remplie d'huile. Cette enceinte déformable est délimitée par une membrane qui s'appuie à ses extrémités opposées, respectivement sur le fond de la cage et sur une plaque mobile 41. Pour exercer sur l'enceinte, la légère surpression requise, un ressort 42 est fixé au centre du fond de la cage 39 et vient en appui permanent contre la plaque 41.

De préférence, un dispositif analogue 43 est associé au moteur 18, pour le protéger contre les entrées d'eau extérieures.

Deux modes de dévirage son possibles. Suivant un premier mode, la station de commande 13 en surface commande, par l'intermédiaire de l'unité de pilotage 35, le moteur en fonction de la vitesse estimée au préalable de dévidement du câble de traction, de façon qu'elle soit constamment supérieure à la vitesse de débrayage du dispositif d'entraînement 28.

Suivant un autre mode de dévirage, on utilise un moyen de mesure de l'avancement du traîneau 2 tel qu'un odomètre 44 d'un type connu. Cet odomètre comporte par exemple une roue à picots qui est maintenue appuyée contre le fond par un moyen élastique tel qu'un amortisseur. La vitesse de rotation de la roue est convertie en incréments angulaires par un instrument de mesure angulaire et les signaux de mesure sont transmis à l'unité de pilotage 35. Celle-ci comporte un micro-contrôleur (non représenté) recevant les signaux de mesure angulaire, et que l'on a programmé pour:
a) ajuster la vitesse du moteur 18 pour qu'elle soit en permanence au moins égale et de préférence un peu supérieure à la vitesse de déroulement du treuil 8 durant les périodes de dévirage; et
b) calculer la distance d'avancement effectif du traîneau 2, de façon à déterminer très précisément les instants d'embrayage et de débrayage du treuil.

On a décrit un ensemble moteur pourvu de moyens d'entraînement 28 de type à roue libre. On ne sortirait pas du cadre de l'invention toutefois, en remplaçant les moyens décrits par tout autre agencement de transmission débrayable sur commande.

On ne sortirait pas non plus du cadre de l'invention en remplaçant éventuellement les moyens de liaison (5,6) par un câble mixte électro-tracteur adapté à transmettre des efforts de traction et comportant une ou plusieurs lignes de transmission, ni en remplaçant les moyens de liaison (10-12) par tout autre mode de liaison mixte.

## Revendications

1. Dispositif pour déplacer de façon discontinue un objet (1) au contact du fond d'une masse d'eau au moyen d'un navire tracteur (3) animé d'un déplacement continu, dans le but d'amener cet objet à des emplacements successifs du fond à distance déterminée les uns des autres, et en chaque emplacement, de l'immobiliser pour une intervention, caractérisé en ce qu'il comporte un véhicule (2) en contact permanent avec le fond et relié au navire tracteur, ce véhicule étant pourvu d'un treuil (8), des moyens de liaison (10, 11)) déroulés du treuil, auquel est fixé ledit objet, et un ensemble moteur (18) associé à une unité de pilotage (35) pour actionner le treuil de façon à déplacer l'objet et annuler sensiblement la force de traction exercée sur ledit équipement durant chaque intervention dudit objet (1).

2. Dispositif selon la revendication 1, caractérisé en ce que les moyens de liaison comportent au moins un câble de traction (10) et au moins un câble de liaison (11) détendu en permanence et associé à des moyens (12) pour le maintenir écarté du fond.

3. Dispositif selon l'une des revendications précédentes, caractérisé en ce que l'unité de pilotage (35) est disposée sur le véhicule (2).

4. Dispositif selon l'une des revendications précédentes, caractérisé en ce qu'il comporte un deuxième véhicule (9) en contact permanent avec le fond, qui est disposé en tête de l'équipement sous-marin (1) et fixé aux moyens de liaison (10, 11).

5. Dispositif selon l'une des revendications précédentes, caractérisé en ce que ledit véhicule (2) est un traîneau pourvu d'une plateforme (14) pour supporter le treuil (8) et l'ensemble moteur (18).

6. Dispositif selon l'une des revendications précédentes, caractérisé en ce que l'ensemble moteur (18) comporte au moins un moteur électrique et des moyens (24-26, 28) d'entraînement du treuil (8) de type à roue libre, l'unité de pilotage (35) étant adaptée à actionner le moteur électrique à une vitesse suffisante pour assurer le découplage des moyens d'entraînement (28) de façon à faire cesser sensiblement tout effort de traction sur le câble de traction (10) durant chaque intervention.

7. Dispositif selon l'une des revendications précédentes, caractérisé en ce que le treuil (8) comporte un tambour (19) associé à des moyens pour contrôler le rangement du câble de traction (10) sur le tambour.

8. Dispositif selon la revendication 1, caractérisé en ce que le treuil (8) comporte un tambour (19) pourvu d'un axe (20), l'ensemble moteur (18) comporte un moteur d'entraînement, contrôlé par l'unité de pilotage (35), une roue (25) montée sur l'axe du tambour par l'intermédiaire de moyens de couplage (28) de type à roue libre, des moyens de transmission pour communiquer à ladite roue les mouvements de rotation du moteur, l'unité de pilotage (35) étant adaptée à commander le virage du treuil (8) par la mise en rotation du moteur dans un premier sens et le dévirage du treuil par mis en rotation du moteur dans le sens opposé a une vitesse suffisante pour que ladite roue (25) tourne au moins aussi vite que l'axe du treuil.

9. Dispositif selon la revendication 8, caractérisé en ce qu'il comporte des paliers (21, 22) pour le support de l'axe (20) du tambour (19) associés à des moyens (37, 38) pour délivrer aux dits paliers (21, 22) un fluide maintenu constamment en surpression par rapport à la pression hydrostatique, de façon à diminuer les forces de frottement du tambour (19) sur son axe (20).

10. Dispositif selon la revendication 9, caractérisé en ce qu'il comporte associés au moteur, des moyens (43) pour délivrer à des paliers supportant l'axe du moteur, un fluide maintenu constamment en surpression par rapport à la pression hydrostatique.

11. Dispositif selon l'une des revendications 9 ou 10, caractérisé en ce que les moyens pour délivrer ledit fluide comportent une enceinte déformable (40) sur laquelle s'exerce en opération la pression hydrostatique et des moyens élastiques (42) pour exercer une pression supplémentaire sur ladite enceinte.

12. Dispositif selon l'une des revendications précédentes, caractérisé en ce qu'il comporte des moyens (44) de mesure du déplacement dudit véhicule (2) sur le fond, connectés avec ladite unité de pilotage (35).

13. Dispositif selon la revendication 2, caractérisé en ce que lesdits moyens pour maintenir ledit câble de liaison (11) écarté du fond, comportent des moyens de flottaison (12).

14. Dispositif selon l'une des revendications précédentes, caractérisé en ce que ledit véhicule (2) est relié à un navire remorqueur (3) par un câble de remorquage (5) et au moins un deuxième câble de liaison (6) de longueur supérieure à celle du câble de remorquage, associé à des moyens de flottaison (7).

15. Dispositif selon l'une des revendications précédentes, caractérisé en ce que ledit véhicule (2) est relié à un navire remorqueur (3) par un câble mixte électro-tracteur.

16. Méthode pour déplacer de façon discontinue un objet (1) au contact du fond d'une masse d'eau de façon à l'amener successivement en une série d'emplacements du fond à distance déterminée les uns des autres, et en chaque emplacement l'immobiliser pour une intervention, caractérisée en ce qu'elle comporte :
- le déplacement continu d'un d'un premier traîneau (2) pourvu d'un treuil (8), en contact permanent avec le fond, au moyen d'un véhicule tracteur;
- le rattachement de l'objet au premier traîneau par des moyens de liaison comportant au moins un câble de traction (10) déroulé dudit treuil; et
- l'application audit objet d'un mouvement discontinu comprenant alternativement des phases d'entraînement par traction sur le câble de traction (10) au moyen du treuil (8) et des phases de relâchement du câble de traction.

## Patentansprüche

1. Vorrichtung zur diskontinuierlichen Verschiebung eines Gegenstandes (1) in Kontakt mit dem Boden einer Wassermasse vermittels eines Schleppschiffs (3), das mit kontinuierlicher Bewegung angetrieben ist, mit dem Ziel, diesen Gegenstand an aufeinanderfolgende Orte des Bodens unter bestimmtem Abstand voneinander zu führen und ihn an jedem Ort für einen Eingriff festzusetzen, dadurch gekennzeichnet, daß sie ein Fahrzeug (2) in dauerndem Kontakt mit dem Boden, das mit einem Schleppfahrzeug verbunden ist, umfaßt, wobei dieses Fahrzeug versehen ist mit einer Winde (8), Verbindungsmitteln (10, 11), die von der Winde abgewickelt sind, an denen dieser Gegenstand befestigt ist, und einer Antriebsanordnung (18) in Zuordnung zu einer Steueranordnung (35) zur Betätigung der Winde derart, daß der Gegenstand bewegt bzw. verschoben wird und im wesentlichen die auf diese Ausrüstung ausgeübte Zugkraft während jedes Eingriffs dieses Gegenstands (1) zu null gemacht wird.

2. Vorrichtung nach Anspruch 1, dadurch gekennzeichnet, daß die Verbindungsmittel wenigstens ein Zugkabel (10) und wenigstens ein Verbindungskabel (11) umfassen, das dauernd entspannt und Mitteln (12) zugeordnet ist, um es unter Abstand vom Boden zu halten.

3. Vorrichtung nach einem der vorhergehenden Ansprüche, dadurch gekennzeichnet, daß die Steuereinheit (35) auf dem Fahrzeug (2) angeordnet ist.

4. Vorrichtung nach einem der vorhergehenden Ansprüche, dadurch gekennzeichnet, daß sie ein zweites Fahrzeug (9) in dauerndem Kontakt mit dem Boden umfaßt, das am Kopf der Unterwasserausrüstung (1) angeordnet und vermittels Verbindungsmitteln (10, 11) fixiert ist.

5. Vorrichtung nach einem der vorhergehenden Ansprüche, dadurch gekennzeichnet, daß das Fahrzeug (2) ein Schlitten ist, der mit einer Plattform (14) zum Tragen der Winde (8) und der Antriebsanordnung (18) versehen ist.

6. Vorrichtung nach einem der vorhergehenden Ansprüche, dadurch gekennzeichnet, daß die Antriebsanordnung (18) wenigstens einen Elektromotor sowie Mittel (24-26, 28) zum Antrieb der Winde (8) vom Typ mit freiem Rad umfaßt, wobei die Steuereinheit (35) so ausgelegt ist, daß sie den Elektromotor bei ausreichender Geschwindigkeit betätigt, um die Entkopplung der Antriebsmittel (28) derart sicherzustellen, daß im wesentlichen jede Zugbeanspruchung am Zugkabel (10) während jedes Eingriffs aufhört.

7. Vorrichtung nach einem der vorhergehenden Ansprüche, dadurch gekennzeichnet, daß die Winde (8) eine Trommel (19) in Zuordnung zu Mitteln umfaßt, um die Einordnung des Zugkabels (10) auf der Trommel zu regeln.

8. Vorrichtung nach Anspruch 1, dadurch gekennzeichnet, daß die Winde (8) eine Trommel (19) umfaßt, die mit einer Achse (20) versehen ist, wobei die Antriebsanordnung (18) einen Antriebsmotor, der von der Steueranordnung (35) geregelt ist, umfaßt, ein Rad (25) auf der Achse der Trommel vermittels der Kopplungsmittel (28) vom Typ mit freiem Rad montiert ist, Übertragungsmittel, um diesem Rad die Drehbewegungen des Motors zu erteilen, wobei die Steueranordnung (35) so ausgelegt ist, daß sie das Drehen der Winde (8) durch In-Drehung-Setzung des Motors in einem ersten Sinne und das Drehen im entgegengesetzten Sinne der Winde durch In-Drehung-Versetzen des Motors im entgegengesetzten Sinn bei ausreichender Geschwindigkeit steuert, derart, daß dieses Rad (25) wenigstens genauso schnell wie die Achse der Winde sich dreht.

9. Vorrichtung nach Anspruch 8, dadurch gekennzeichnet, daß sie Lager (21, 22) für das Abstützen oder Tragen der Achse (20) der Trommel (19) in Zuordnung zu Mitteln (37, 38) umfaßt, um an diese Lager (21, 22) ein Fluid zu liefern, das dauernd unter einem Überdruck, bezogen auf den hydrostatischen Druck, derart gehalten wird, daß die Reibungskräfte der Trommel (19) auf ihrer Achse (20) vermindert werden.

10. Vorrichtung nach Anspruch 9, dadurch gekennzeichnet, daß sie, zugeordnet zum Motor, Mittel (43) umfaßt, um die Achse des Motors tragenden Lagern ein Fluid zu liefern, das dauernd unter Überdruck, bezogen auf den hydrostatischen Druck, gehalten wird.

11. Vorrichtung nach einem der Ansprüche 9 oder 10, dadurch gekennzeichnet, daß die Mittel zur Lieferung dieses Fluids eine verformbare Kammer (40) umfassen, auf die im Betrieb der hydrostatische Druck wirkt, sowie elastische Mittel (42), um einen zusätzlichen Druck auf diese Kammer auszuüben.

12. Vorrichtung nach einem der vorhergehenden Ansprüche, dadurch gekennzeichnet, daß sie Mittel (44) zur Messung der Bewegung oder Verschiebung dieses Fahrzeugs (2) auf dem Erdboden umfaßt, die mit dieser Steuereinheit (35) verbunden sind.

13. Vorrichtung nach Anspruch 2, dadurch gekennzeichnet, daß diese Mittel, um dieses Verbindungskabel (11) unter Abstand vom Boden zu halten, Auftriebsmittel (12) umfassen.

14. Vorrichtung nach einem der vorhergehenden Ansprüche, dadurch gekennzeichnet, daß dieses Fahrzeug (2) mit einem Schleppschiff (3) über ein Schleppkabel (5) und wenigstens ein zweites Verbindungskabel (6) von einer Länge verbunden ist, die größer als die des Schleppkabels, in Zuordnung zu Auftriebsmitteln (7), ist.

15. Vorrichtung nach einem der vorhergehenden Ansprüche, dadurch gekennzeichnet, daß dieses Fahrzeug (2) mit einem Schleppschiff (3) über ein gemischtes Elektrozugkabel verbunden ist.

16. Verfahren zur diskontinuierlichen Verschiebung oder Bewegung eines Gegenstands (1) in Kontakt mit dem Boden einer Wassermasse, derart, daß er nacheinander an eine Reihe von Orten des Bodens, unter bestimmtem Abstand voneinander, geführt wird und daß er an jedem Ort für einen Eingriff stillgesetzt wird, dadurch gekennzeichnet, daß es umfaßt:
- die kontinuierliche Bewegung eines ersten, mit einer Winde (8) versehenen Schlittens (2) in dauerndem Kontakt mit dem Boden vermittels eines Schleppfahrzeugs;
- die Befestigung des Gegenstands am ersten Schlitten über Verbindungsmittel, die wenigstens ein von dieser Winde abgezogenes Zugkabel (10) umfassen; und
- die Anwendung auf diesen Gegenstand einer diskontinuierlichen Bewegung, die alternativ Antriebsphasen durch Zug auf dieses Zugkabel (10) vermittels der Winde (8) sowie Phasen des Loslassens des Zugkabels umfassen.

## Claims

1. A device for discontinuously moving an object (1) in contact with the bed of a water mass by means of a tractor vessel (3) travelling in continuous motion, with a view to conveying this object to successive locations on the bed at a given distance from one another and, at each location, immobilising it for service operation, characterised in that it has a vehicle (2) in permanent contact with the bed and linked to the tractor vessel, this vehicle being provided with a winch (8), linking means (10, 11) unwound from the winch, to which said object is secured, and a motor unit (18) linked to a piloting unit (35) to operate the winch so as to displace the object and essentially cancel out the traction force applied to said equipment each time said object is in service operation.

2. A device as claimed in claim 1, characterised in that the linking means comprise at least one traction cable (10) and at least one permanently slack linking cable (11) operating in conjunction with means (12) to hold it away from the bottom.

3. A device as claimed in one of the preceding claims, characterised in that the piloting unit (35) is placed on the vehicle (2).

4. A device as claimed in one of the preceding claims, characterised in that it has a second vehicle (9) permanently in contact with the bed, which is disposed at the head of the underwater equipment (1) and fixed to the linking means (10, 11).

5. A device as claimed in one of the preceding claims, characterised in that said vehicle (2) is a sled provided with a platform (14) to support the winch (8) and the motor unit (18).

6. A device as claimed in one of the preceding claims, characterised in that the motor unit (18) has at least one electric motor and means (24-26, 28) for driving the winch (8) of the free wheel type, the piloting unit (35) being set up to activate the electric motor at a sufficient speed to ensure that the drive means (28) are disengaged essentially in order to cease any traction force on the traction cable (10) during each service operation.

7. A device as claimed in one of the preceding claims, characterised in that the winch (8) has a drum (19) associated with means for controlling the stowing of the traction cable (10) on the drum.

8. A device as claimed in claim 1, characterised in that the winch (8) has a drum (19) provided with a spindle (20), the motor unit (18) having a drive motor controlled by the piloting unit (35), a free wheel (25) mounted on the spindle of the drum by a coupling means (28) of the free wheel type, transmission means for imparting to said wheel the rotary movements of the motor, the piloting unit (35) being set up to control the winding of the winch (8) by rotating the motor in a first direction and unwinding the winch by rotating the motor in the opposite direction at a sufficient speed to rotate said wheel (25) at the same speed at least as the winch shaft.

9. A device as claimed in claim 8, characterised in that it has bearings (21, 22) to support the spindle (20) of the drum (19) associated with means (37, 38) for delivering to said bearings (21, 22) a fluid which is constantly maintained at over-pressure relative to the hydrostatic pressure in order to reduce the friction forces of the drum (19) on its spindle (20).

10. A device as claimed in claim 9, characterised in that it has, linked to the motor means, means (43) for delivering to the bearings supporting the shaft of the motor a fluid which is constantly maintained at over-pressure relative to the hydrostatic pressure.

11. A device as claimed in one of claims 9 or 10, characterised in that the means for delivering said fluid consist of a deformable receptacle (40) on which hydrostatic pressure is exerted during operation and resilient means (42) to exert additional pressure on said receptacle.

12. A device as claimed in one of the preceding claims, characterised in that it has means (44) for measuring the displacement of said vehicle (2) on the bed, connected to said piloting unit (35).

13. A device as claimed in claim 2, characterised in that said means for keeping said linking cable (11) away from the bed are float means (12).

14. A device as claimed in one of the preceding claims, characterised in that said vehicle (2) is connected to a towing vessel (3) by means of a towing cable (5) and by at least a second linking cable (6) of a length greater than that of the towing cable, operating in conjunction with float means (7).

15. A device as claimed in one of the preceding claims, characterised in that said vehicle (2) is connected to a towing vessel (3) by means of a combined power-towing cable.

16. A method of continuously displacing an object (1) in contact with the bed of a water mass in order to bring it successively to a series of locations on the bed at a given distance from one another and, at each location, immobilise it during service operation, characterised in that it consists in:
- continuously displacing a first sled (2) provided with a winch (8), in permanent contact with the bed, by means of a tractor vehicle;
- attaching the object to the first sled by linking means consisting of at least one traction cable (10) unwound from said winch; and
- applying a discontinuous movement to said object by alternating driving phases of traction applied to the traction cable (10) by means of the winch (8) and phases of releasing the traction cable.
